# EUROPEAN PATENT APPLICATION

(11) **EP 4 787 665 A1**
(43) Date of publication of application: **05.08.2026**
(21) Application number: 25155640.3
(22) Date of filing: 03.02.2025
(51) Int. Cl.: H02J 7/02, H02J 50/00, H02J 50/12, H04R 1/10

(54) **A HEARING DEVICE, A HEARING DEVICE CHARGING SYSTEM AND A METHOD OF WIRELESSLY CHARGING A HEARING DEVICE**

(71) Applicant: GN Hearing A/S, 2750 Ballerup (DK)
(72) Inventor: KORFF, Lasse Emil, 2750 Ballerup (DK); GURRE, Nicolaj, 2750 Ballerup (DK)
(74) Representative: Zacco Denmark A/S

(57) **Abstract**

Disclosed is a hearing device (100) comprising a charging receiver circuit (110) configured for converting an electromagnetic signal into a direct current, DC, signal. The charging receiver circuit (110) comprises a receiver coil circuit (120) configured to receive the electromagnetic signal from a power transmitter (220) and to generate an alternating current, AC, signal having a peak amplitude in response to the received electromagnetic signal, and a rectifier circuit (130) arranged in connection with the receiver coil circuit (120), wherein the rectifier circuit (130) is configured to receive the generated AC signal and to output the DC signal having a magnitude being above the peak amplitude of the generated AC signal.

## Description

### FIELD

The present invention relates to a hearing device. The present invention also relates to a hearing device charging system comprising a hearing device and a charging device. The present invention also relates to a method of wirelessly charging a hearing device.

### BACKGROUND

Hearing devices have developed significantly over the past years. These devices typically rely on rechargeable batteries to ensure prolonged operation and user convenience. However, the charging process introduces several challenges with heat generation being a significant concern.

During charging, power dissipation within associated charging circuitry can lead to increased temperatures, which may adversely affect the charging process, performance, durability, and safety of the device. This problem is intensified in small hearing devices, due to their compact and enclosed design which limits effective heat dissipation and thermal management. Thus, there is a need for an improved hearing device, an improved hearing device charging system, and an improved method of wirelessly charging a hearing device to address the abovementioned challenges.

### SUMMARY

A conventional charging circuit of a hearing device typically comprises a full-wave bridge rectifier circuit or a half-wave bridge rectifier circuit. Such circuits are configured to receive an alternating current (AC) signal and output a direct current (DC) signal. There are some differences between the full-wave bridge rectifier circuit and the half-wave bridge rectifier circuit in terms of efficiency, performance and output quality. However, they both present several challenges such as voltage drop and heat dissipation. The heat dissipation is intensified in small devices such as hearing devices and may damage other components of the hearing device such as rechargeable batteries of the hearing device. The voltage drop also contributes to overheating problem during the charging process, especially under fast charging conditions. Thus, it may be needed to stop the charging process to lower the temperature and to restart the charging process at a later time which makes the charging process more inefficient. The full-wave bridge rectifier circuit has even a higher voltage drop than the half-wave bridge rectifier circuit which makes it even less suitable for low power devices such as the hearing devices.

It is an object of the invention to provide an improved hearing device which allows for an improved charging process with reduced heat dissipation. It is further objects of the invention to provide an improved hearing device charging system and an improved method of wirelessly charging a hearing device.

According to a first aspect of the invention, a hearing device is disclosed. The hearing device comprises a charging receiver circuit. The charging receiver circuit is configured for converting an electromagnetic signal into a direct current signal, DC signal. The charging receiver circuit comprises a receiver coil circuit. The receiver coil circuit is configured to receive the electromagnetic signal from a power transmitter and to generate an alternating current signal, AC signal, having a peak amplitude in response to the received electromagnetic signal. The charging receiver circuit further comprises a rectifier circuit. The rectifier circuit is arranged in connection with the receiver coil circuit. The rectifier circuit is configured to receive the generated AC signal. The rectifier circuit is configured to output the DC signal having a magnitude. The magnitude of the DC signal is above the peak amplitude of the generated AC signal.

The electromagnetic signal may be received from the power transmitter. The electromagnetic signal may be received from the power transmitter of a charging device. The charging device may be configured for wireless charging of the hearing device. The charging device may be configured for magnetic inductive charging of the hearing device. The charging device may be configured for wireless magnetic inductive charging of the hearing device. The charging device may be an external charging device. The charging device may not be physically connected to the hearing device via a physical connector.

The charging receiver circuit comprises the receiver coil circuit. The receiver coil circuit is configured to receive the electromagnetic signal from the power transmitter. The receiver coil circuit is configured to receive the electromagnetic signal from the wireless power transmitter. The receiver coil circuit may comprise a receiver coil. The receiver coil of the receiver coil circuit may be configured to receive the electromagnetic signal form the power transmitter of the charging device. The receiver coil circuit is configured to generate the AC signal. The receiver coil of the receiver coil circuit may be configured to generate the AC signal. The generated AC signal has the peak amplitude in response to the received electromagnetic signal. By the peak amplitude of the AC signal is hereby meant the maximum absolute value of the signal, current or voltage, measured from the zero level to its highest positive or lowest negative point within a cycle.

The charging receiver circuit further comprises the rectifier circuit. The rectifier circuit is arranged in connection with the receiver coil circuit. The rectifier circuit is configured to receive the generated AC signal and to output the DC signal. The rectifier circuit is advantageous as it allows for rectifying the generated AC signal and outputting the DC signal. The outputted DC signal from the rectifier circuit has the magnitude. The magnitude of the DC signal, current or voltage, is above the peak amplitude of the generated AC signal.

The AC signal may have a peak voltage amplitude. The DC signal may have an output voltage. The output voltage of the DC signal may be above the peak voltage amplitude of the AC signal. That is the peak voltage amplitude of the AC signal may be below the output voltage of the DC signal.

It is an advantage that the charging receiver circuit allows for optimizing the energy/power transfer from the charging device to the hearing device. The rectifier circuit of the charging receiver circuit allows for outputting the DC signal having the magnitude above the peak amplitude of the generated AC signal. The rectifier circuit of the charging receiver circuit may allow for the output voltage of the DC signal to be above the peak voltage amplitude of the generated AC signal. Thereby, the rectifier circuit of the charging receiver circuit allows for reception of a weaker/lower strength/reduced magnitude/decreased amplitude electromagnetic signal, compared to the conventional charging receiver circuits. The rectifier circuit of the charging receiver circuit may allow for reception of an electromagnetic signal with a lower voltage magnitude, compared to the conventional charging receiver circuits. Thereby, the rectifier circuit of the charging receiver circuit allows for preventing or at least mitigating energy losses which typically occurs in the receiver coil circuit e.g. coupling losses, resistive impedances. The rectifier circuit of the charging receiver circuit allows preventing or at least mitigating the overheating during the charging process which may otherwise occur due to such losses. This rectifier circuit of the charging receiver circuit in turn allows for providing an improved charging receiver circuit in terms of efficiency.

The rectifier circuit of the charging receiver circuit allows for providing an improved charging receiver circuit in terms of reliability and life time. That is the reduction of the overheating allows for protecting the charging receiver circuit and other components of the hearing device. The hearing device may comprise a rechargeable battery. The overheating may damage the rechargeable battery of the hearing device e.g. the overheating may reduce the life time of the battery. Thereby, the rectifier circuit of the charging receiver circuit allows for protecting the rechargeable battery e.g. increasing the life time of the battery and allowing for an improved performance in terms of reliability.

The rectifier circuit of the charging receiver circuit is advantageous as it allows for reducing a size of the receiver coil circuit in a flexible manner. The rectifier circuit of the charging receiver circuit allows for reducing an impedance of the receiver coil circuit. The rectifier circuit of the charging receiver circuit may allow for reducing an impedance of the receiver coil of the receiver coil circuit. That is the receiver coil circuit may comprise a receiver coil with a lower impedance, compared to the conventional charging receiver circuits. Thereby, a smaller receiver coil may be used which in turn may allow for reducing a size of the receiver coil circuit. The smaller size of the receiver coil circuit allows for providing an improved design for the charging receiver circuit of the hearing device in a flexible manner. For instance, the receiver coil of the receiver coil circuit may be implemented on a printed circuit board assembly (PCBA) of the hearing device. Thus, the rectifier circuit of the charging receiver circuit is advantageous as it allows for an improved receiver coil circuit in terms of flexibility and size. Thereby, it allows for a more compact and thus lightweight hearing device.

The rectifier circuit of the charging receiver circuit is advantageous as it allows for reducing sensitivity of the hearing device to misalignment during the charging process. Thereby, it allows for easier positioning of the charging receiver circuit and thus the hearing device at/on the charging device with reduced critical alignment constrains. This in turn allows for an improved hearing device in terms of reliability by reducing sensitivity to misalignment.

In overall, the inventive charging receiver circuit of the hearing device allows for an improved wireless charging of the hearing device by optimizing the magnetic inductive charging of the hearing device. The inventive charging receiver circuit further allows for an improved hearing device in terms of flexibility, simplicity, size, efficiency, and reliability.

In an embodiment, a hearing device is configured to be worn by a user. The hearing device may be arranged at the user's ear, on the user's ear, over the user's ear, in the user's ear, in the user's ear canal, behind the user's ear and/or in the user's concha, i.e., the hearing device is configured to be worn in, on, over and/or at the user's ear. The user may wear two hearing devices, one hearing device at each ear. The two hearing devices may be connected, such as wirelessly connected and/or connected by wires, such as a binaural hearing aid system.

The hearing device may be a hearable such as a headset, headphone, earphone, earbud, hearing aid, a personal sound amplification product (PSAP), an over-the-counter (OTC) hearing device, a hearing protection device, a one-size-fits-all hearing device, a custom hearing device or another head-wearable hearing device. Hearing devices can include both prescription devices and non-prescription devices.

The hearing device may be embodied in various housing styles or form factors. Some of these form factors are Behind-the-Ear (BTE) hearing device, Receiver-in-Canal (RIC) hearing device, Receiver-in-Ear (RIE) hearing device or Microphone-and-Receiver-in-Ear (MaRIE) hearing device. These devices may comprise a BTE unit configured to be worn behind the ear of the user and an in the ear (ITE) unit configured to be inserted partly or fully into the user's ear canal. Generally, the BTE unit may comprise at least one input transducer, a power source and a processing unit. The term BTE hearing device refers to a hearing device where the receiver, i.e. the output transducer, is comprised in the BTE unit and sound is guided to the ITE unit via a sound tube connecting the BTE and ITE units, whereas the terms RIE, RIC and MaRIE hearing devices refer to hearing devices where the receiver may be comprise in the ITE unit, which is coupled to the BTE unit via a connector cable or wire configured for transferring electric signals between the BTE and ITE units.

Some of these form factors are In-the-Ear (ITE) hearing device, Completely-in-Canal (CIC) hearing device or Invisible-in-Canal (IIC) hearing device. These hearing devices may comprise an ITE unit, wherein the ITE unit may comprise at least one input transducer, a power source, a processing unit and an output transducer. These form factors may be custom devices, meaning that the ITE unit may comprise a housing having a shell made from a hard material, such as a hard polymer or metal, or a soft material such as a rubber-like polymer, molded to have an outer shape conforming to the shape of the specific user's ear canal.

Some of these form factors are earbuds, on the ear headphones or over the ear headphones. The person skilled in the art is well aware of different kinds of hearing devices and of different options for arranging the hearing device in, on, over and/or at the ear of the hearing device wearer. The hearing device (or pair of hearing devices) may be custom fitted, standard fitted, open fitted and/or occlusive fitted.

In an embodiment, the hearing device may comprise one or more input transducers. The one or more input transducers may comprise one or more microphones. The one or more input transducers may comprise one or more vibration sensors configured for detecting bone vibration. The one or more input transducer(s) may be configured for converting an acoustic signal into a first electric input signal. The first electric input signal may be an analogue signal. The first electric input signal may be a digital signal. The one or more input transducer(s) may be coupled to one or more analogue-to-digital converter(s) configured for converting the analogue first input signal into a digital first input signal.

In an embodiment, the hearing device may comprise one or more wireless communication unit(s). The one or more wireless communication unit(s) may comprise one or more wireless receiver(s), one or more wireless transmitter(s), one or more transmitter-receiver pair(s) and/or one or more transceiver(s). At least one of the one or more wireless communication unit(s) may be coupled to the one or more antenna(s). The wireless communication unit may be configured for converting a wireless signal received by at least one of the one or more antenna(s) into a second electric input signal. The hearing device may be configured for wired/wireless audio communication, e.g. enabling the user to listen to media, such as music or radio and/or enabling the user to perform phone calls.

In an embodiment, the wireless signal may originate from one or more external source(s) and/or external devices, such as spouse microphone device(s), wireless audio transmitter(s), smart computer(s) and/or distributed microphone array(s) associated with a wireless transmitter. The wireless input signal(s) may origin from another hearing device, e.g., as part of a binaural hearing system and/or from one or more accessory device(s), such as a smartphone and/or a smart watch.

In an embodiment, the hearing device may include a processing unit. The processing unit may be configured for processing the first and/or second electric input signal(s). The processing may comprise compensating for a hearing loss of the user, i.e., apply frequency dependent gain to input signals in accordance with the user's frequency dependent hearing impairment. The processing may comprise performing feedback cancelation, beamforming, tinnitus reduction/masking, noise reduction, noise cancellation, speech recognition, bass adjustment, treble adjustment and/or processing of user input. The processing unit may be a processor, an integrated circuit, an application, functional module, etc. The processing unit may be implemented in a signal-processing chip or a printed circuit board (PCB). The processing unit may be configured to provide a first electric output signal based on the processing of the first and/or second electric input signal(s). The processing unit may be configured to provide a second electric output signal. The second electric output signal may be based on the processing of the first and/or second electric input signal(s).

In an embodiment, the hearing device may comprise an output transducer. The output transducer may be coupled to the processing unit. The output transducer may be a receiver. It is noted that in this context, a receiver may be a loudspeaker, whereas a wireless receiver may be a device configured for processing a wireless signal. The receiver may be configured for converting the first electric output signal into an acoustic output signal. The output transducer may be coupled to the processing unit via the magnetic antenna. The output transducer may be comprised in an ITE unit or in an earpiece, e.g. Receiver-in-Ear (RIE) unit or Microphone-and-Receiver-in-Ear (MaRIE) unit, of the hearing device. One or more of the input transducer(s) may be comprised in an ITE unit or in an earpiece.

In an embodiment, the wireless communication unit may be configured for converting the second electric output signal into a wireless output signal. The wireless output signal may comprise synchronization data. The wireless communication unit may be configured for transmitting the wireless output signal via at least one of the one or more antennas.

In an embodiment, the hearing device may comprise a digital-to-analogue converter configured to convert the first electric output signal, the second electric output signal and/or the wireless output signal into an analogue signal.

In an embodiment, the hearing device may comprise a power source. The power source may comprise a battery providing a first voltage. The battery may be a rechargeable battery. The battery may be a replaceable battery. The power source may comprise a power management unit. The power management unit may be configured to convert the first voltage into a second voltage. The power source may comprise a charging coil. The charging coil may be provided by the magnetic antenna.

In an embodiment, the hearing device may comprise a memory, including volatile and nonvolatile forms of memory.

The magnitude of the DC signal may be in the range of 1.5 to 2.5 greater than the peak amplitude of the generated AC signal. The magnitude of the DC signal may preferably be in the range of 1.7 to 2.3 greater than the peak amplitude of the generated AC signal. The magnitude of the DC signal may more preferably be in the range of 1.9 to 2.1 greater than the peak amplitude of the generated AC signal.

The magnitude of the voltage of the DC signal may be in the range of 1.5 to 2.5 greater than the peak voltage amplitude of the generated AC signal. The magnitude of the voltage of the DC signal may preferably be in the range of 1.7 to 2.3 greater than the peak voltage amplitude of the generated AC signal. The magnitude of the voltage of the DC signal may more preferably be in the range of 1.9 to 2.1 greater than the peak voltage amplitude of the generated AC signal.

The rectifier circuit may be a voltage doubler rectifier circuit. The rectifier circuit may be arranged in parallel with the receiver coil circuit. The rectifier circuit may be a voltage doubler. The term voltage doubler and the term voltage doubler rectifier circuit may be used interchangeably in the following. The voltage doubler rectifier circuit may allow for the output voltage of the DC signal to be twice the peak voltage amplitude of the AC signal. Such doubling of the voltage may in turn facilitate optimizing the energy/power transfer from the charging device to the hearing device. The voltage doubler rectifier circuit may facilitate reception of an electromagnetic signal with a lower voltage magnitude, compared to the conventional charging receiver circuits. The voltage doublet rectifier circuit may allow for further preventing, or at least further mitigating, energy losses and the overheating. The voltage doubler rectifier circuit may also be advantages, as it is a simple circuit and does not require additional complex circuits. The voltage doubler rectifier circuit may also be advantages, as it provides an improved output DC signal e.g. a smoother signal e.g. compared to conventional half-wave rectifier circuits. The voltage doubler rectifier circuit may also be advantages, as it is cheap and compact which is desired for portable devices e.g. the hearing devices. The voltage doubler rectifier circuit may also be advantages, as it is more efficient, compared to some other conventional rectifier circuits. Thereby, the voltage doubler rectifier circuit may facilitate providing an improved hearing device in terms of simplicity, cost, weight and complexity, and efficiency.

The rectifier circuit may comprise a first diode having a first anode and a first cathode. The first anode may be arranged in connection with a first terminal of the receiver coil circuit. The first anode may be configured to receive the AC signal. The rectifier circuit may comprise a first capacitor. The first capacitor may be arranged in between the cathode of the first diode and a second terminal of the receiver coil circuit. The rectifier circuit may comprise a second diode having a second anode and a second cathode. The second cathode may be arranged in connection with the first anode of the first diode. The rectifier circuit may comprise a second capacitor. The second capacitor may be arranged in between the second anode of the second diode and the second terminal of the receiver coil circuit. The rectifier circuit may be configured to output the DC signal across the first capacitor and the second capacitor. The output signal may have the magnitude. The magnitude may be at least twice the peak amplitude of the generated AC voltage. Thereby, the rectifier circuit may be a conventional and commercially-available voltage doubler. The rectifier circuit may be a voltage doubler comprising two diodes and two capacitors arranged in connection with one another in a manner which per se is known in the art.

The receiver coil circuit may comprise a resonant circuit. The receiver coil circuit may comprise a receiver coil. The resonant circuit may comprise the receiver coil. The receiver coil may be configured to receive the electromagnetic signal. The receiver coil may comprise a magnetic core and metal windings wound around the magnetic core. The receiver coil circuit may comprise a capacitor.

The resonant circuit may be an inductor-capacitor (LC) circuit. The resonant circuit may comprise a capacitor. The capacitor may be arranged in parallel with the receiver coil. The capacitor may be configured to store energy in the form of an electric field. The capacitor may be configured to tune a resonant frequency of the receiver coil. The resonant circuit may be advantageous, as it allows for minimal energy loss, selectivity of frequency, and ease of tuning. The resonant circuit may be advantageous, as it is a simple, compact, cost-effective, and efficient circuit.

The charging receiver circuit may further comprise a voltage regulation circuit. The voltage regulation circuit may be arranged in connection with the rectifier circuit. The voltage regulation circuit may be configured to stabilize the DC signal. Thereby, the voltage regulation circuit may allow for providing a stable output voltage. The voltage regulation circuit may allow for improving a performance, an accuracy, a power efficiency of the hearing device. The voltage regulation circuit may prevent over-voltage and under-voltage conditions. The voltage regulation circuit may be advantageous in that it is a simple, compact, and cost-effective circuit.

The hearing device may further comprise a charging circuit. The charging circuit may be arranged in connection with the rectifier circuit. The charging circuit may be configured to receive the DC signal. The charging circuit may be arranged in connection with the voltage regulation circuit. The charging circuit may receive the stabilized DC signal from the voltage regulation circuit. The charging circuit may be configured to provide charge to the hearing device.

The charging circuit may comprise a rechargeable battery. The rechargeable battery may be arranged in connection with the rectifier circuit. The rechargeable battery may be configured to receive the DC signal. The rechargeable battery may be arranged in connection with the voltage regulation circuit. The rechargeable battery may be configured to receive the stabilized DC signal. The rechargeable battery may comprise any conventional and commercially available rechargeable battery e.g. lithium ion batteries.

The charging receiver circuit may be arranged in a hearing device housing. The charging receiver circuit may be arranged inside the hearing device housing. The charging receiver circuit may be completely enclosed by the hearing device housing. The receiver coil circuit, the rectifier circuit, the voltage regulation circuit and the charging circuit may be arranged in the hearing device housing. The receiver coil circuit, the rectifier circuit, the voltage regulation circuit and the charging circuit may be arranged inside the hearing device housing. The receiver coil circuit, the rectifier circuit, the voltage regulation circuit and the charging circuit may be completely enclosed by the hearing device housing.

The hearing device may comprise any of a behind-the-ear, BTE, hearing device, an in-the-ear, ITE, hearing device, or an on-the-ear, OTE, hearing device. The hearing device may be any type of hearing device. The hearing device may preferably be the BTE hearing device.

According to a second aspect of the invention, a hearing device charging system is provided. The hearing device charging system comprises a hearing device and a charging device. The charging device is configured to receive the hearing device. The charging device is configured for magnetic inductive charging of the hearing device. The hearing device comprises a charging receiver circuit. The charging receiver circuit is configured for converting an electromagnetic signal into a direct current signal, DC signal. The charging receiver circuit comprises a receiver coil circuit. The receiver coil circuit is configured to receive the electromagnetic signal from a power transmitter of the charging device. The receiver coil circuit is configured to generate an alternating current signal, AC signal having a peak amplitude in response to the received electromagnetic signal. The charging receiver circuit comprises a rectifier circuit. The rectifier circuit is arranged in connection with the receiver coil circuit. The rectifier circuit is configured to receive the generated AC signal and to output the DC signal having a magnitude being above the peak amplitude of the generated AC signal.

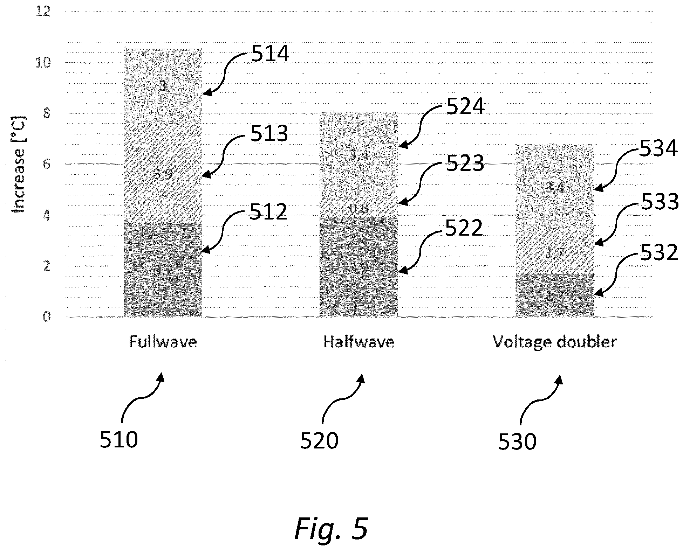

The charging device is configured to receive the hearing device. For instance, the charging device may comprise a charging surface. The charging device may be configured to receive the hearing device at/on the charging surface. The charging device may be configured to receive a portion/part of the housing of the hearing device at/on the charging surface. The charging device allows for magnetic inductive charging of the hearing device. The charging device allows for wireless magnetic inductive charging of the hearing device. This aspect may generally present the same or similar advantaged as defined above in relation to the first aspect of the invention. The inventors have simulated temperature increases in batteries of three different hearing devices, each comprising a different rectifier circuit, due to heat losses in various components of the respective hearing device. A charging receiver circuit of a first hearing device comprises a full-wave rectifier circuit. A charging receiver circuit of a second hearing device comprises a half-wave rectifier circuit. A charging receiver circuit of a third hearing device comprises a voltage doubler rectifier circuit. The other components/parts of the hearing devices are similar. The simulated results (shown in Fig. 5 and described in the detailed description below) show that a total temperature increase in the battery of the hearing device comprising the voltage doubler rectifier circuit is less than a total temperature increase in the battery of the hearing device comprising the half-wave rectifier circuit. The simulated results also show that a total temperature increase in the battery of the hearing device comprising the voltage doubler rectifier circuit is less than a total of the temperature increase in the battery of the hearing device comprising the full-wave rectifier circuit. In particular, the simulated results show that the temperature increase in the battery of the hearing device comprising the voltage doubler rectifier circuit due to heat losses in the receiver coil of the respective hearing device is much below (less than half of) the temperature increases in the batteries of the other two hearing devices comprising the full-wave and the half-wave rectifier circuit.

The power transmitter of the charging device may comprise a transmitter coil. An inductance of the transmitter coil of the power transmitter is above an inductance of the receiver coil of the receiver coil circuit. In other words, the inductance of the receiver coil of the receiver coil circuit may be above the inductance of the transmitter coil of the power transmitter of the charging device. A voltage across the receiver coil of the receiver coil circuit may be above a voltage across the transmitter coil of the power transmitter of the charging device. For instance, the voltage across the receiver coil of the receiver coil circuit may be 2.5 V and the voltage across the transmitter coil of the power transmitter of the charging device may be 5 V.

According to a third aspect of the invention, a method of wirelessly charging a hearing device is provided. The method comprises receiving an electromagnetic signal by a receiver coil circuit of the hearing device. The method comprises generating an alternating current, AC, signal having a peak amplitude in response to the received electromagnetic signal by the receiver coil circuit of the hearing device. The method comprises receiving the generated AC signal by a rectifier circuit of the hearing device. The method comprises outputting a DC signal having a magnitude: The magnitude of the DC signal is at least twice the peak amplitude of the generated AC signal.

This aspect may generally present the same or similar advantaged as defined above in relation to the first and the second aspect of the invention.

The present invention relates to different aspects including the hearing device, the system, and the method described above and in the following, and corresponding parts, each yielding one or more of the benefits and advantages described in connection with the first mentioned aspect, and each having one or more embodiments corresponding to the embodiments described in connection with the first mentioned aspect and/or disclosed in the appended claims.

### BRIEF DESCRIPTION OF THE DRAWINGS

The above and other features and advantages will become readily apparent to those skilled in the art by the following detailed description of exemplary embodiments thereof with reference to the attached drawings, in which:
Fig. 1 schematically illustrates an exemplary hearing device.
Fig. 2 schematically illustrates an exemplary hearing device system.
Fig. 3 schematically illustrates an exemplary circuit of a hearing device.
Fig. 4 schematically illustrates an exemplary circuit of a hearing device system.
Fig. 5 schematically illustrates the simulated temperature increases in batteries of three different hearing devices, each comprising a different rectifier circuit, due to heat losses in various components of the respective hearing device.
Fig. 6 schematically illustrates a method for wirelessly charging a hearing device.

### DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

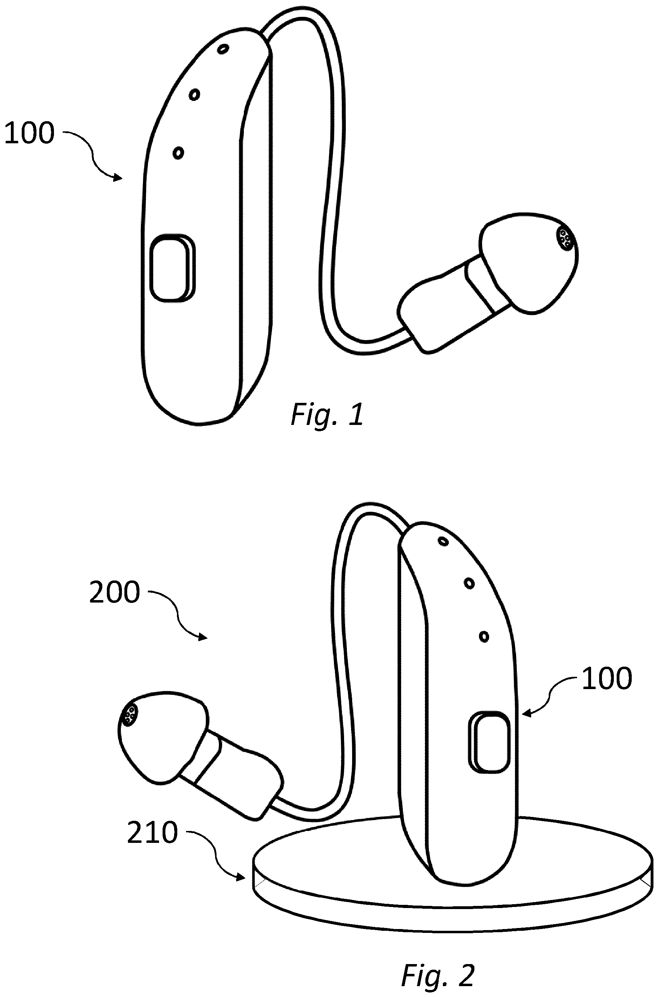

Fig. 1 schematically illustrates an exemplary hearing device 100. The hearing device 100 shown in Fig. 1 is a behind-the-ear, BTE, hearing device 100. The hearing device 100 may comprise any of a BTE hearing device 100, an in-the-ear, ITE, hearing device 100, or an on-the-ear, OTE, hearing device 100. The hearing device 100 may comprise any type of the hearing device 100. The hearing device 100 may be any hearing device 100.

Fig. 2 schematically illustrates an exemplary hearing device system 200. The hearing device system 200 comprises a hearing device 100. The hearing device system 200 comprises a charging device 210. The charging device 210 is configured to receive the hearing device 100. The charging device 210 is configured for magnetic inductive charging of the hearing device 100.

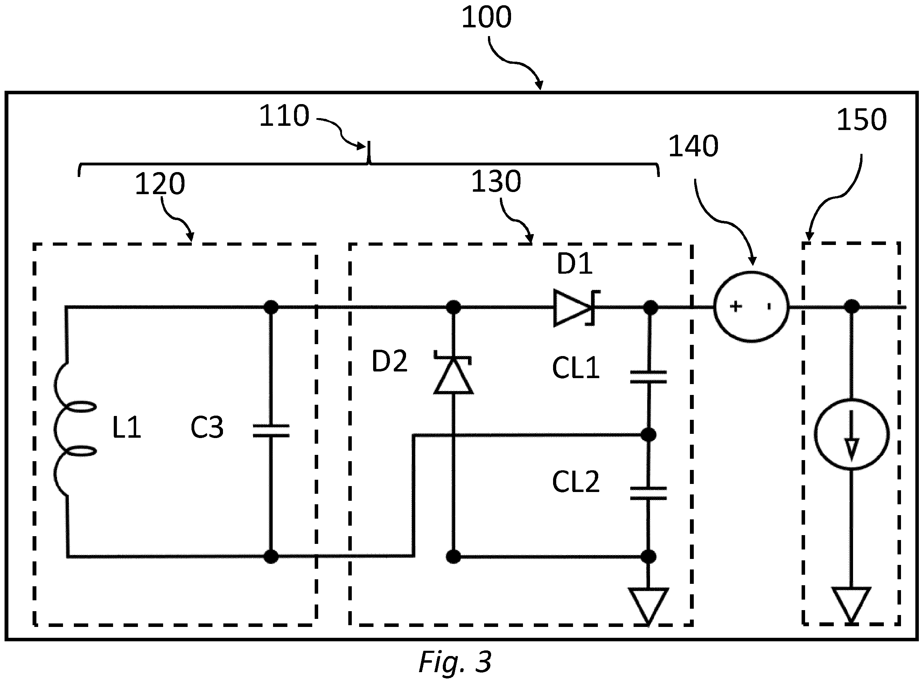

Fig. 3 schematically illustrates an exemplary circuit of a hearing device 100. The hearing device 100 comprises a charging receiver circuit 110. The charging receiver circuit 110 is configured for converting an electromagnetic signal into a direct current signal, DC signal. The charging receiver circuit 110 comprises a receiver coil circuit 120. The receiver coil circuit 120 is configured to receive the electromagnetic signal from a power transmitter 220. The receiver coil circuit 120 is configured to generate an alternating current signal, AC signal, having a peak amplitude in response to the received electromagnetic signal. The receiver coil circuit 120 may comprise a resonant circuit 120. The receiver coil circuit 120 may comprise a receiver coil L1. The resonant circuit 120 may comprise the receiver coil L1. The receiver coil L1 may be configured to receive the electromagnetic signal. The receiver coil L1 may comprise a magnetic core. The receiver coil L1 may comprise metal windings wound around the magnetic core. The receiver coil circuit 120 may comprise a capacitor C3. The resonant circuit 120 may comprise the capacitor C3. The capacitor C3 may be arranged in parallel with the receiver coil L1.

Fig. 3 shows that the charging receiver circuit 110 comprises a rectifier circuit 130. The rectifier circuit 130 is arranged in connection with the receiver coil circuit 120. The rectifier circuit 130 may be a voltage doubler rectifier circuit 130. The voltage doubler rectifier circuit 130 may be arranged in parallel with the receiver coil circuit 120. The rectifier circuit 130 may comprise a first diode D1. The first diode D1 may have a first anode and a first cathode. The first anode of the first diode D1 may be arranged in connection with a first terminal of the receiver coil circuit 120. The first anode of the first diode D1 may be configured to receive the AC signal. The rectifier circuit 130 may comprise a first capacitor CL1. The first capacitor CL1 may be arranged in between the cathode of the first diode D1 and a second terminal of the receiver coil circuit 120. The rectifier circuit 130 may comprise a second diode D2. The second diode D2 may have a second anode and a second cathode. The second cathode may be arranged in connection with the first anode of the first diode D1. The rectifier circuit 130 may comprise a second capacitor CL2. The second capacitor CL2 may be arranged in between the second anode of the second diode D2 and the second terminal of the receiver coil circuit 120.

The rectifier circuit 130 is configured to receive the generated AC signal. The rectifier circuit 130 is configured to output the DC signal having a magnitude. The magnitude is above the peak amplitude of the generated AC signal. The rectifier circuit 130 may be configured to output the DC signal across the first capacitor CL1 and the second capacitor CL2. The DC signal may have the magnitude. The magnitude may be at least twice the peak amplitude of the generated AC voltage. The AC signal may have a peak voltage amplitude. The DC signal may have an output voltage. The output voltage of the DC signal may be above the peak voltage amplitude of the AC signal. The magnitude of the DC signal may be in the range of 1.5 to 2.5 greater than the peak amplitude of the generated AC signal.

Fig. 3 shows that the charging receiver circuit 110 further comprises a voltage regulation circuit 140. The voltage regulation circuit 140 may be arranged in connection with the rectifier circuit130. The voltage regulation circuit 140 may be configured to stabilize the DC signal. The hearing device 100 may further comprises a charging circuit 150. The charging circuit 150 may be arranged in connection with the rectifier circuit 130. The charging circuit 150 may be configured to receive the DC signal. The charging circuit 150 may comprises a rechargeable battery. The rechargeable battery may be arranged in connection with the rectifier circuit 130. The rechargeable battery may be configured to receive the DC signal. The charging receiver circuit 110 may be arranged in a hearing device housing.

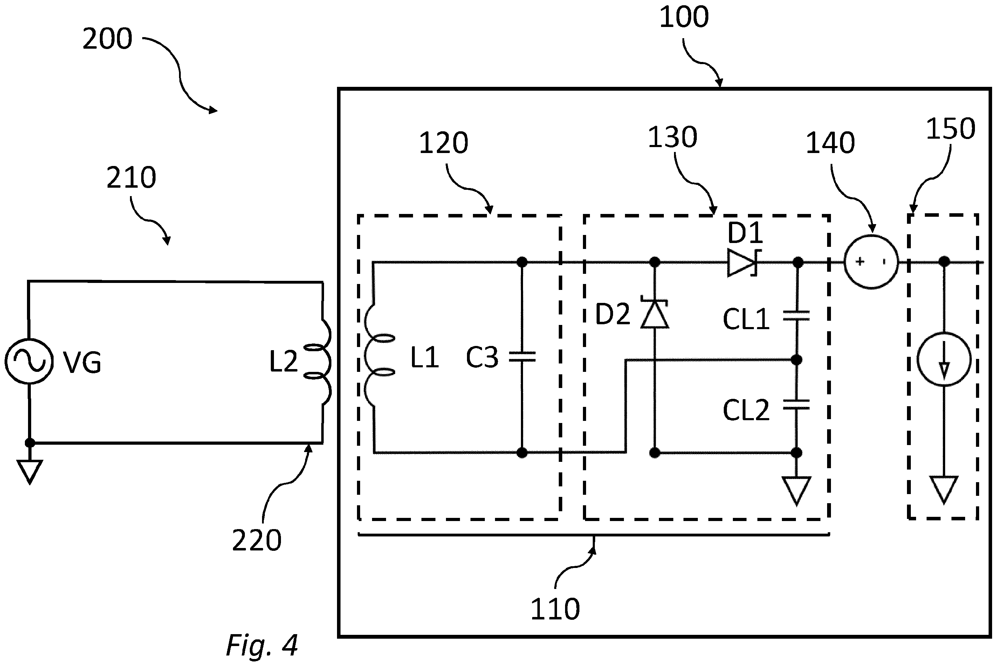

Fig. 4 schematically illustrates an exemplary circuit of a hearing device system. The hearing device charging system 200 comprises a hearing device 100. The hearing device charging system 200 comprises a charging device 210. The charging device 210 is configured to receive the hearing device 100. The charging device 210 is configured for magnetic inductive charging of the hearing device 100. For instance, the hearing device may be arranged on the charging device, as shown in Fig. 2. The hearing device 100 may comprises a charging receiver circuit 110. The charging receiver circuit 110 is configured for converting an electromagnetic signal into a direct current, DC, signal. The charging receiver circuit 110 comprises a receiver coil circuit 120. The receiver coil circuit 120 is configured to receive the electromagnetic signal from a power transmitter 220 of the charging device 210. The power transmitter 220 of the charging device 210 may comprise a transmitter coil L2. An inductance of the transmitter coil L2 of the power transmitter 220 may be above an inductance of the receiver coil L1 of the receiver coil circuit 120. The receiver coil circuit 120 is configured to generate an alternating current, AC, signal. The AC signal has a peak amplitude in response to the received electromagnetic signal. The charging receiver circuit 110 comprises a rectifier circuit 130. The rectifier circuit 130 is arranged in connection with the receiver coil circuit 120. The rectifier circuit 130 is configured to receive the generated AC signal. The rectifier circuit 130 is configured to output the DC signal. The DC signal has a magnitude. The magnitude of the DC signal is above the peak amplitude of the generated AC signal.

Fig. 5 schematically illustrates the simulated temperature increases in batteries of three different hearing devices 100, each comprising a different rectifier circuit 130, due to heat losses in various components of the respective hearing device 100. A charging receiver circuit 110 of a first hearing device 100 comprises a full-wave rectifier circuit 130. A charging receiver circuit 110 of a second hearing device 100 comprises a half-wave rectifier circuit 130. A charging receiver circuit 110 of a third hearing device 100 comprises a voltage doubler rectifier circuit 130. The other components/parts of the hearing devices 100 are similar.

Fig. 5 shows that the temperature increase in the battery of the hearing device 100 comprising the full-wave rectifier circuit 130 due to heat losses in the receiver coil 512 of the respective hearing device 100 is 3.7 °C. Fig. 5 shows that the temperature increase in the battery of the hearing device 100 comprising the half-wave rectifier circuit 130 due to heat losses in the receiver coil 522 of the respective hearing device 100 is 3.9 °C. Fig. 5 shows that the temperature increase in the battery of the hearing device 100 comprising the voltage doubler rectifier circuit 130 due to heat losses in the receiver coil 532 of the respective hearing device 100 is 1.7 °C.

Fig. 5 shows that the temperature increase in the battery of the hearing device 100 comprising the full-wave rectifier circuit 130 due to heat losses in the rectifier circuit 513 of the respective hearing device 100 is 3.9 °C. Fig. 5 shows that the temperature increase in the battery of the hearing device 100 comprising the half-wave rectifier circuit 130 due to heat losses in the rectifier circuit 523 of the respective hearing device 100 is 0.8 °C. Fig. 5 shows that the temperature increase in the battery of the hearing device 100 comprising the voltage doubler rectifier circuit 130 due to heat losses in the rectifier circuit 533 of the respective hearing device 100 is 1.7 °C.

Fig. 5 shows that the temperature increase in the battery of the hearing device 100 comprising the full-wave rectifier circuit 130 due to heat losses in the charging circuit 514 of the respective hearing device 100 is 3 °C. Fig. 5 shows that the temperature increase in the battery of the hearing device 100 comprising the half-wave rectifier circuit 130 due to heat losses in the charging circuit 524 of the respective hearing device 100 is 3.4 °C. Fig. 5 shows that the temperature increase in the battery of the hearing device 100 comprising the voltage doubler rectifier circuit 130 due to heat losses in the charging circuit 534 of the respective hearing device 100 is 3.4 °C.

Fig. 5 shows that a total temperature increase 530 in the battery of the hearing device 100 comprising the voltage doubler rectifier circuit 130 is less than a total temperature increase 520 in the battery of the hearing device 100 comprising the half-wave rectifier circuit 130. The simulated results also show that a total temperature increase 530 in the battery of the hearing device 100 comprising the voltage doubler rectifier circuit 130 is less than a total of the temperature increase 510 in the battery of the hearing device 100 comprising the full-wave rectifier circuit 130.

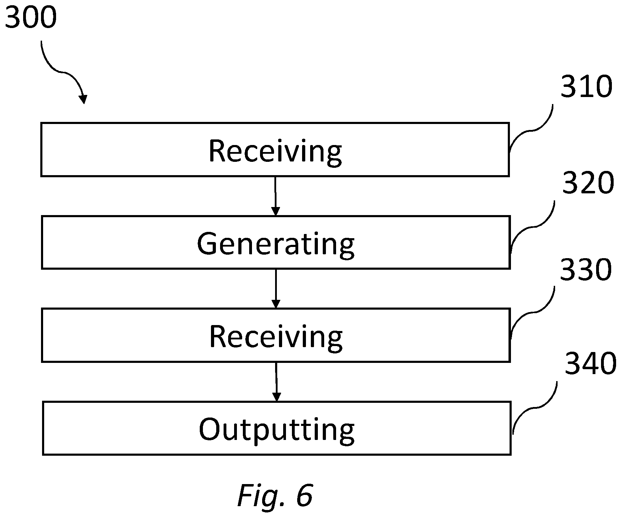

Fig. 6 schematically illustrates a method 300 for wirelessly charging a hearing device 100. The method 300 comprises receiving 310 an electromagnetic signal by a receiver coil circuit 120 of the hearing device 100. The method 300 comprises generating 320 an alternating current, AC, signal. The AC signal has a peak amplitude in response to the received electromagnetic signal by the receiver coil circuit 120 of the hearing device 100. The method 300 comprises receiving 330 the generated AC signal by a rectifier circuit 130 of the hearing device 100. The method 300 comprises outputting 340 a DC signal having a magnitude. The magnitude of the DC signal is at least twice the peak amplitude of the generated AC signal. The method 300 may be performed by the hearing device, as described above in relation to Figs. 1 and 3. The hearing device 100 may wirelessly be charged by the charging device 210, as described above in relation to Figs. 2 and 4.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is intended to cover all alternatives, modifications and equivalents.

### ITEMS:

1. A hearing device (100) comprising:
   a charging receiver circuit (110) configured for converting an electromagnetic signal into a direct current signal, DC signal, comprising:
   a receiver coil circuit (120) configured to receive the electromagnetic signal from a power transmitter (220) and to generate an alternating current signal, AC signal, having a peak amplitude in response to the received electromagnetic signal, and
   a rectifier circuit (130) arranged in connection with the receiver coil circuit (120), wherein the rectifier circuit (130) is configured to receive the generated AC signal and to output the DC signal having a magnitude being above the peak amplitude of the generated AC signal.
2. The hearing device (100) according to item 1, wherein the AC signal has a peak voltage amplitude and wherein the DC signal has an output voltage, and wherein the output voltage of the DC signal is above the peak voltage amplitude of the AC signal.
3. The hearing device (100) according to item 1 or 2, wherein the magnitude of the DC signal is in the range of 1.5 to 2.5 greater than the peak amplitude of the generated AC signal.
4. The hearing device (100) according to any of the preceding items, wherein the rectifier circuit (130) is a voltage doubler rectifier circuit (130) arranged in parallel with the receiver coil circuit (120).
5. The hearing device (100) according to item 1, wherein the rectifier circuit (130) comprises:
   a first diode (D1) having a first anode and a first cathode, the first anode being arranged in connection with a first terminal of the receiver coil circuit (120) and configured to receive the AC signal,
   a first capacitor (CL1) arranged in between the cathode of the first diode (D1) and a second terminal of the receiver coil circuit (120),
   a second diode (D2) having a second anode and a second cathode, the second cathode being arranged in connection with the first anode of the first diode (D1), and
   a second capacitor (CL2) arranged in between the second anode of the second diode (D2) and the second terminal of the receiver coil circuit (120),
   wherein the rectifier circuit (130) is configured to output the DC signal across the first capacitor (CL1) and the second capacitor (CL2) having the magnitude being above the peak amplitude of the generated AC voltage.
6. The hearing device (100) according to any of the preceding items, wherein the receiver coil circuit (120) comprises a resonant circuit (120).
7. The hearing device (100) according to any of the preceding items, wherein the receiver coil circuit (120) comprises a receiver coil (L1) configured to receive the electromagnetic signal, and wherein the receiver coil (L1) comprises a magnetic core and metal windings wound around the magnetic core.
8. The hearing device (100) according to any of the preceding items, wherein the charging receiver circuit (110) further comprises a voltage regulation circuit (140) arranged in connection with the rectifier circuit (130) and configured to stabilize the DC signal.
9. The hearing device (100) according to any of the preceding items, wherein the hearing device (100) further comprises a charging circuit (150) arranged in connection with the rectifier circuit (130) and configured to receive the DC signal.
10. The hearing device (100) according to item 9, wherein the charging circuit (150) comprises a rechargeable battery, arranged in connection with the rectifier circuit (130) and configured to receive the DC signal.
11. The hearing device (100) according to any of the preceding items, wherein the charging receiver circuit (110) is arranged in a hearing device housing.
12. The hearing device (100) according to any of the preceding items, wherein the hearing device (100) comprises any of a behind-the-ear, BTE, hearing device, an in-the-ear, ITE, hearing device, or an on-the-ear, OTE, hearing device.
13. A hearing device charging system (200) comprising a hearing device (100) and a charging device (210),
   the charging device (210) is configured to receive the hearing device (100) and further configured for magnetic inductive charging of the hearing device (100),
   the hearing device (100) comprising:
   a charging receiver circuit (110) configured for converting an electromagnetic signal into a direct current signal, DC signal, comprising:
      a receiver coil circuit (120) configured to receive the electromagnetic signal from a power transmitter (220) of the charging device (210) and to generate an alternating current signal, AC signal, having a peak amplitude in response to the received electromagnetic signal, and
   a rectifier circuit (130) arranged in connection with the receiver coil circuit (120), wherein the rectifier circuit (130) is configured to receive the generated AC signal and to output the DC signal having a magnitude being above the peak amplitude of the generated AC signal.
14. The hearing device charging system (200) according to item 13, wherein the AC signal has a peak voltage amplitude and wherein the DC signal has an output voltage, and wherein the output voltage of the DC signal is above the peak voltage amplitude of the AC signal.
15. The hearing device charging system (200) according to item 13 or 14, wherein the magnitude of the DC signal is in the range of 1.5 to 2.5 greater than the peak amplitude of the generated AC signal.
16. The hearing device charging system (200) according to any of the items 13-15, wherein the power transmitter (220) of the charging device (210) comprises a transmitter coil (L2), wherein an inductance of the transmitter coil (L2) of the power transmitter (220) is above an inductance of the receiver coil (L1) of the receiver coil circuit (120).
17. A method (300) of wirelessly charging a hearing device (100), the method (300) comprising:
   receiving (310) an electromagnetic signal by a receiver coil circuit (120) of the hearing device (100),
   generating (320) an alternating current, AC, signal having a peak amplitude in response to the received electromagnetic signal by the receiver coil circuit (120) of the hearing device (100),
   receiving (330) the generated AC signal by a rectifier circuit (130) of the hearing device (100), and
   outputting (340) a DC signal having a magnitude,
   wherein the magnitude of the DC signal is above the peak amplitude of the generated AC signal.
18. The method (300) according to item 17, wherein the AC signal has a peak voltage amplitude and wherein the DC signal has an output voltage, and wherein the output voltage of the DC signal is above the peak voltage amplitude of the AC signal.
19. The method (300) according to item 17 or 18, wherein the magnitude of the DC signal is in the range of 1.5 to 2.5 greater than the peak amplitude of the generated AC signal.

### LIST OF REFERENCES

- 100: Hearing device
- 110: Charging receiver circuit
- 120: Receiver coil circuit / resonant circuit
- 130: Rectifier circuit / voltage doubler
- 140: Voltage regulation circuit
- 150: Charging circuit
- 200: Hearing device charging system
- 210: Charging device
- 220: Power transmitter
- L1: Receiver coil
- L2: Transmitter coil
- D1: First diode
- D2: Second diode
- CL1: First capacitor
- CL2: Second capacitor
- C3: Capacitor
- 510: Temperature increase in battery of a hearing device comprising a Full-wave rectifier circuit
- 520: Temperature increase in battery of a hearing device comprising a half-wave rectifier circuit
- 530: Temperature increase in battery of a hearing device comprising a voltage doubler rectifier circuit
- 512, 522, 532: heat losses in receiver coil
- 513, 523, 533: heat losses in rectifier circuit
- 514, 524, 534: heat losses in charging circuit

## Claims

1. A hearing device (100) comprising:
a charging receiver circuit (110) configured for converting an electromagnetic signal into a direct current signal, DC signal, comprising:
a receiver coil circuit (120) configured to receive the electromagnetic signal from a power transmitter (220) and to generate an alternating current signal, AC signal, having a peak amplitude in response to the received electromagnetic signal, and
a rectifier circuit (130) arranged in connection with the receiver coil circuit (120), wherein the rectifier circuit (130) is configured to receive the generated AC signal and to output the DC signal having a magnitude being above the peak amplitude of the generated AC signal.

2. The hearing device (100) according to claim 1, wherein the AC signal has a peak voltage amplitude and wherein the DC signal has an output voltage, and wherein the output voltage of the DC signal is above the peak voltage amplitude of the AC signal.

3. The hearing device (100) according to claim 1 or 2, wherein the magnitude of the DC signal is in the range of 1.5 to 2.5 greater than the peak amplitude of the generated AC signal.

4. The hearing device (100) according to any of the preceding claims, wherein the rectifier circuit (130) is a voltage doubler rectifier circuit (130) arranged in parallel with the receiver coil circuit (120).

5. The hearing device (100) according to claim 1, wherein the rectifier circuit (130) comprises:
a first diode (D1) having a first anode and a first cathode, the first anode being arranged in connection with a first terminal of the receiver coil circuit (120) and configured to receive the AC signal,
a first capacitor (CL1) arranged in between the cathode of the first diode (D1) and a second terminal of the receiver coil circuit (120),
a second diode (D2) having a second anode and a second cathode, the second cathode being arranged in connection with the first anode of the first diode (D1), and
a second capacitor (CL2) arranged in between the second anode of the second diode (D2) and the second terminal of the receiver coil circuit (120),
wherein the rectifier circuit (130) is configured to output the DC signal across the first capacitor (CL1) and the second capacitor (CL2) having the magnitude being above the peak amplitude of the generated AC voltage.

6. The hearing device (100) according to any of the preceding claims, wherein the receiver coil circuit (120) comprises a resonant circuit (120).

7. The hearing device (100) according to any of the preceding claims, wherein the receiver coil circuit (120) comprises a receiver coil (L1) configured to receive the electromagnetic signal, and wherein the receiver coil (L1) comprises a magnetic core and metal windings wound around the magnetic core.

8. The hearing device (100) according to any of the preceding claims, wherein the charging receiver circuit (110) further comprises a voltage regulation circuit (140) arranged in connection with the rectifier circuit (130) and configured to stabilize the DC signal.

9. The hearing device (100) according to any of the preceding claims, wherein the hearing device (100) further comprises a charging circuit (150) arranged in connection with the rectifier circuit (130) and configured to receive the DC signal.

10. The hearing device (100) according to claim 9, wherein the charging circuit (150) comprises a rechargeable battery, arranged in connection with the rectifier circuit (130) and configured to receive the DC signal.

11. The hearing device (100) according to any of the preceding claims, wherein the charging receiver circuit (110) is arranged in a hearing device housing.

12. The hearing device (100) according to any of the preceding claims, wherein the hearing device (100) comprises any of a behind-the-ear, BTE, hearing device, an in-the-ear, ITE, hearing device, or an on-the-ear, OTE, hearing device.

13. A hearing device charging system (200) comprising a hearing device (100) and a charging device (210),
the charging device (210) is configured to receive the hearing device (100) and further configured for magnetic inductive charging of the hearing device (100),
the hearing device (100) comprising:
a charging receiver circuit (110) configured for converting an electromagnetic signal into a direct current signal, DC signal, comprising:
a receiver coil circuit (120) configured to receive the electromagnetic signal from a power transmitter (220) of the charging device (210) and to generate an alternating current signal, AC signal, having a peak amplitude in response to the received electromagnetic signal, and
a rectifier circuit (130) arranged in connection with the receiver coil circuit (120), wherein the rectifier circuit (130) is configured to receive the generated AC signal and to output the DC signal having a magnitude being above the peak amplitude of the generated AC signal.

14. The hearing device charging system (200) according to claim 13, wherein the power transmitter (220) of the charging device (210) comprises a transmitter coil (L2), wherein an inductance of the transmitter coil (L2) of the power transmitter (220) is above an inductance of the receiver coil (L1) of the receiver coil circuit (120).

15. A method (300) of wirelessly charging a hearing device (100), the method (300) comprising:
receiving (310) an electromagnetic signal by a receiver coil circuit (120) of the hearing device (100),
generating (320) an alternating current, AC, signal having a peak amplitude in response to the received electromagnetic signal by the receiver coil circuit (120) of the hearing device (100),
receiving (330) the generated AC signal by a rectifier circuit (130) of the hearing device (100), and
outputting (340) a DC signal having a magnitude,
wherein the magnitude of the DC signal is above the peak amplitude of the generated AC signal.
